## Europäisches Patentamt
## European Patent Office
## Office européen des brevets

(19)

(11) Veröffentlichungsnummer: **0 110 059**
**B1**

(12)

# EUROPÄISCHE PATENTSCHRIFT

(45) Veröffentlichungstag der Patentschrift:
16.12.87

(51) Int. Cl.⁴: **G 01 B 5/00**

(21) Anmeldenummer: **83109925.4**

(22) Anmeldetag: **05.10.83**

(54) Längenmesseinrichtung.

(30) Priorität: **27.11.82 DE 3243966**

(43) Veröffentlichungstag der Anmeldung:
**13.06.84 Patentblatt 84/24**

(45) Bekanntmachung des Hinweises auf die Patenterteilung:
**16.12.87 Patentblatt 87/51**

(84) Benannte Vertragsstaaten:
**AT CH DE FR GB IT LI NL SE**

(56) Entgegenhaltungen:
**EP-A-0 042 916**
**DE-A-2 643 304**
**DE-A-2 853 771**
**FR-A-2 300 990**
**US-A-3 251 590**
**US-A-3 816 002**
**US-A-4 196 757**

**Druckschrift der Firma Dr Johannes Heidenhain**
**"Messtechnische Informationen" 8, Aug., März 1980**

(73) Patentinhaber: **Dr. Johannes Heidenhain GmbH,**
**Nansenstrasse 17, D-8225 Traunreut (DE)**

(72) Erfinder: **Nelle, Günther, Dr.- Ing., Eichenweg 12,**
**D-8221 Bergen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Längenmeßeinrichtung zum Messen oder Einstellen der Relativlage zweier Objekte, insbesondere eine gekapselte Längenmeßeinrichtung, gemäß dem Oberbegriff des Anspruchs 1.

In der US-A-3,816,002 ist eine gekapselte Längenmeßeinrichtung beschrieben, bei der ein Maßband am einen Ende fest und am anderen Ende über eine Dehneinrichtung mit einem Gehäuse verbunden ist. Das Gehäuse ist an beiden Enden über jeweils ein Befestigungselement mit einem zu messenden Objekt verbunden; das erste Befestigungselement ist starr am Objekt befestigt, während das zweite Befestigungselement längsverschieblich mit dem Objekt verbunden ist. Das längsverschiebliche Befestigungselement weist einen in Meßrichtung verlaufenden Längsschlitz auf, der eine Schraube in der Anbaufläche des Objekts umgreift. Eine am Schraubenkopf anliegende Druckfeder dient zum Andrücken des zweiten Befestigungselements an die Anbaufläche des Objekts. Diese Längsverschieblichkeit des zweiten Befestigungselements ist wegen der Druckfeder nicht zwangskräftefrei; zudem kann es bei Erschütterungen oder Vibrationen der Bearbeitungsmaschine zum Abheben des zweiten Befestigungselements von der Anbaufläche des Objekts kommen. Die Dehneinrichtung dient zum Dehnen des Maßbandes auf die richtige Meßlänge und zur Vermeidung einer Übertragung von thermischen Längenänderungen des Gehäuses auf das Maßband.

Aus der DE-A-26 43 304 ist eine gekapselte Längenmeßeinrichtung zum Messen der relativen Lage zweier Objekte bekannt, bei der der Teilungsträger für eine Teilung im Inneren eines Hohlprofils auf den Rändern einer Längsauskehlung aufliegt und in seiner Mitte mittels eines Klebemittels sehr geringer Elastizität und an weiteren Stellen mittels eines Klebemittels hoher Elastizität befestigt ist. Das Hohlprofil weist an seinen Enden jeweils ein Befestigungselement mit Schwachstellen in Form von Rillen auf, die Spannungen bei der Befestigung des Hohlprofils auf der Anbaufläche des zu messenden Objekts vermeiden sollen. Bei dieser Meßeinrichtung besitzt der Maßstab, der aus der Teilung und dem Teilungsträger besteht, in seiner Mitte einen Fixpunkt (Nullpunkt) bezüglich des Hohlprofils; bei unterschiedlichen temperaturbedingten Längenänderungen des Hohlprofils und des zu messenden Objekts treten aber wegen der starren Befestigung des Hohlprofils an beiden Enden am zu messenden Objekt Längskräfte (Zwangskräfte) in Meßrichtung auf, die zu einer Verschiebung des Fixpunktes und damit zu Meßungenauigkeiten führen können.

Aus der DE-OS 28 53 771 ist eine Längenmeßeinrichtung bekannt, deren Gehäuse an beiden Enden über Befestigungselemente mit einem zu messenden Objekt verbunden ist. Während das eine Ende des Gehäuses direkt mit einem ersten Befestigungselement verbunden ist, ist zwischen dem anderen Ende des Gehäuses und einem zweiten Befestigungselement ein Längenausgleichselement derart angeordnet, daß dieses Ende des Gehäuses mit einem translatorischen Freiheitsgrad in Längsrichtung des Gehäuses gelagert ist.

Um bei Temperaturänderungen keine Nullpunktverschiebungen des im Inneren des Gehäuses untergebrachten Maßstabs gegenüber dem Gehäuse zu erhalten, sollte bei dieser Längenmeßeinrichtung der Maßstab an demselben Ende, an dem das Gehäuse direkt mit einem Befestigungselement verbunden ist, fest mit dem Gehäuse verbunden sein.

Wird dagegen der Maßstab über seine ganze Länge beispielsweise mit einer elastischen Klebeschicht im Gehäuse befestigt und nicht einseitig fixiert, so daß der Maßstab bei thermischen Längenänderungen im wesentlichen unabhängig vom Gehäuse, in Meßrichtung beweglich ist, ergibt sich ein Fixpunkt (Nullpunkt) etwa in der Mitte des Maßstabs bezüglich des Gehäuses. Wegen der direkten Befestigung des einen Endes des Gehäuses am ersten Befestigungselement erfolgt dann aber bei einer thermischen Längenänderung des Gehäuses eine mehr oder weniger große Verschiebung aller Punkte des Maßstabs gegenüber dem zu messenden Objekt, wenn das Gehäuse und das zu messende Objekt unterschiedliche thermische Ausdehnungskoeffizienten besitzen.

Der Erfindung liegt die Aufgabe zugrunde, bei einer Längenmeßeinrichtung der oben genannten Gattung eine Befestigung für den Träger des Maßstabs anzugeben, bei der die Lage des Maßstabs bezüglich des zu messenden Objekts bei Temperaturänderungen im wesentlichen erhalten bleibt.

Diese Aufgabe wird erfindungsgemäß durch die kennzeichnenden Merkmale des Anspruchs 1 gelöst.

Die mit der Erfindung erzielten Vorteile bestehen insbesondere darin, daß bei einer derartigen Längenmeßeinrichtung der Träger und das zu messende Objekt aus Materialien mit unterschiedlichen thermischen Ausdehnungskoeffizienten bestehen können, ohne daß bei Temperaturänderungen die Meßgenauigkeit wesentlich beeinträchtigt wird. Der Maßstab kann z. B. auf einfache Weise über eine gleichmäßige elastische Klebeschicht am Träger befestigt werden, ohne daß er an einem Ende mit zusätzlichen Mitteln fest mit dem Gehäuse verbunden werden muß.

In der Druckschrift der Firma Dr. Johannes Heidenhain "Meßtechnische Informationen" 8. Ausgabe, März 1980 sind im Aufsatz "Wegmeßsysteme für große Werkzeugmaschinen" von Alfons Ernst auf Seite 33 Längenmeßeinrichtungen beschrieben, deren Gehäuse gemäß Bild 1-3 an beiden Enden über Befestigungselemente mit dem zu messenden Objekt verbunden sind. Bei großen Meßlängen sind zur Vermeidung des Durchhangs des Gehäuses infolge seines Eigengewichts weitere Befestigungswinkel für das Gehäuse zwischen den Befestigungselementen an den Enden des Gehäuses angeordnet.

Vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1 eine Seitenansicht einer Längenmeßeinrichtung mit Merkmalen der Erfindung und

Figur 2 ein Befestigungselement für das Gehäuseende der Längenmeßeinrichtung.

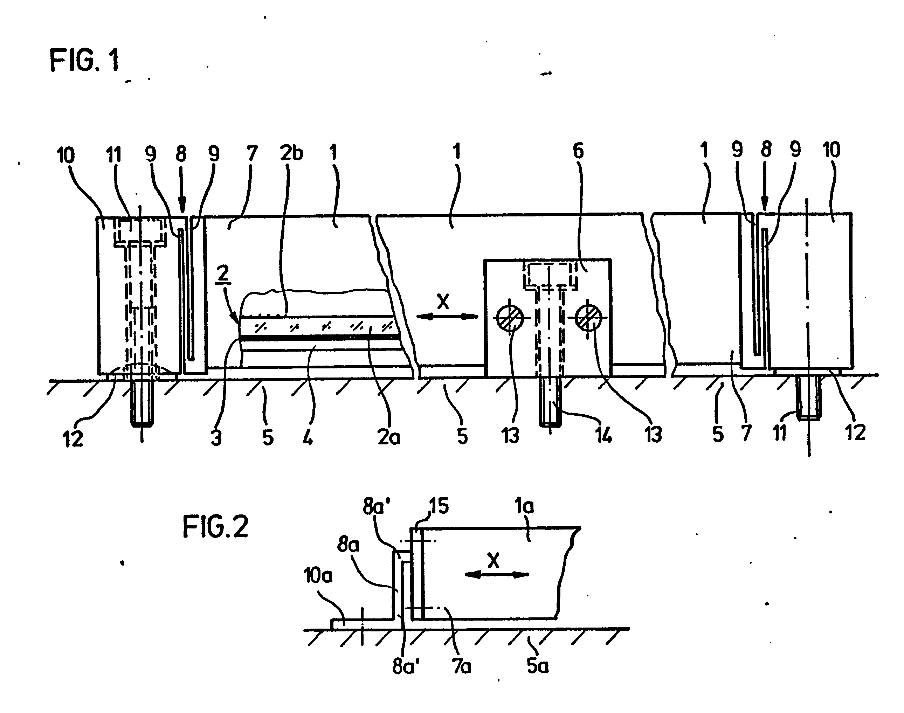

In Figur 1 ist eine bevorzugt gekapselte Längenmeßeinrichtung dargestellt, deren Träger 1 für einen Maßstab 2 in Form eines biegesteifen langgestreckten Hohlprofils beispielsweise aus Aluminium ausgebildet ist. Im Inneren des Gehäuses 1 ist der Teilungsträger 2a für die Teilung 2b des Maßstabs 2 mittels einer elastischen Klebeschicht 3 auf einer Innenfläche 4 des Gehäuses 1 befestigt; die Teilung 2b des Maßstabs 2 wird in bekannter Weise von einer nicht gezeigten Abtasteinheit zur Messung der Relativlage zweier Objekte (z. B. Bett und Schlitten einer Bearbeitungsmaschine) abgetastet. Während die Abtasteinheit in nicht dargestellter Weise mit dem einen Objekt verbunden ist, ist das Gehäuse 1 am anderen Objekt 5 beispielsweise aus Grauguß befestigt.

Erfindungsgemäß ist das Gehäuse 1 etwa in seiner Mitte über ein erstes Befestigungselement 6 direkt mit dem zu messenden Objekt 5 mittels Schrauben 13, 14 verbunden. Des weiteren ist das Gehäuse 1 an beiden Enden 7 über Längenausgleichselemente 8 mit weiteren Befestigungselementen 10 verbunden, die ihrerseits mittels Schrauben 11 über jeweils ein Kugelgelenk 12 am Objekt 5 befestigt sind.

Das Längenausgleichselement 8 ist integrierender Bestandteil des Befestigungselements 10 und wird durch in Ebenen etwa senkrecht zur Meßrichtung X (Längsrichtung des Gehäuses 1) verlaufende mäanderförmige Schlitze 9 gebildet. Die Befestigungselemente 10 mit den Längenausgleichselementen 8 ermöglichen eine Lagerung der Enden 7 des Gehäuses 1 mit einem translatorischen Freiheitsgrad in Meßrichtung X.

Trotz der unterschiedlichen thermischen Ausdehnungskoeffizienten von Gehäuse 1 und Objekt 5 bleibt durch die direkte starre Befestigung des Gehäuses 1 etwa in seiner Mitte über das erste Befestigungselement 6 am Objekt 5 und durch die bewegliche Lagerung der Enden 7 des Gehäuses 1 in Meßrichtung X am Objekt 5 die Lage des Maßstabs 2 bezüglich des zu messenden Objekts 5 bei Temperaturänderungen im wesentlichen erhalten, da Längenänderungen sowohl des Gehäuses 1 als auch des Maßstabs 2 symmetrisch zur Mitte nach beiden Seiten hin in Meßrichtung X erfolgen, so daß in der Maßstabsmitte ein fester Meßbezugspunkt (Fixpunkt) erhalten bleibt, wodurch die Meßgenauigkeit verbessert wird. Wegen der beweglichen Lagerung der Enden 7 des Gehäuses 1 treten auch keine Längskräfte bei temperaturbedingten Längenänderungen des Gehäuses 1 bezüglich des Objekts 5 auf, die zu einer Verschiebung des Meßbezugspunktes in der Mitte des Maßstabs 2 führen können. Die elastische Klebeschicht 3 gleicht unterschiedliche thermische Längenänderungen zwischen dem Teilungsträger 2a des Maßstabs 2 beispielsweise aus Glas und dem Gehäuse 1 aus Aluminium aus, so daß alle Teile des Maßstabs 2 den entsprechenden Teilen des zu messenden Objekts 5 in ihrer Lage im wesentlichen zugeordnet bleiben.

In nicht gezeigter Weise kann der Teilungsträger des Maßstabs auch aus einem flexiblen Metallband bestehen, das in einer Nut des Trägers für den Maßstab formschlüssig, aber im wesentlichen kräftefrei angeordnet ist.

In Figur 2 ist ein Ende 7a eines Gehäuses 1a mit einem Abschlußdeckel 15 verschlossen, der über ein Längenausgleichselement 8a mit zwei Federgelenken 8a' mit einem an einem zu messenden Objekt 5a angeordneten Befestigungselement 10a verbunden ist. Das Befestigungselement 10a und das Ausgleichselement 8a sind in Form eines Doppel-L-Winkels ausgebildet und bestehen mitsamt dem Abschlußdeckel 15 aus einem Stück. Die beiden Federgelenke 8a' besitzen jeweils eine senkrecht zur Meßrichtung X verlaufende Drehachse.

In nicht gezeigter Weise kann das Längenausgleichselement auch aus zwei miteinander verbundenen Drehgelenken mit senkrecht zur Meßrichtung X verlaufender Drehachse bestehen. Des weiteren kann das Längenausgleichselement durch ein Federelement gemäß der DE-OS 28 53 771 oder durch ein Längslager (Längsführung) gebildet sein.

Die Kugelgelenke 12 bei den Befestigungselementen 10 dienen zum spannungsfreien Anbau des Gehäuses 1 an einer unebenen Anbaufläche des Objekts 5. Da die Längenausgleichselemente 8 eine geringe Winkelbewegung des Gehäuses 1 in einer Ebene parallel zur Meßrichtung X und senkrecht zur Anbaufläche des Objekts 5 zulassen, können die Kugelgelenke 12 auch entfallen. Das Befestigungselement 10 dient gleichzeitig als Abschlußdeckel für das Gehäuse 1.

**Patentansprüche**

1. Längenmeßeinrichtung zum Messen oder Einstellen der Relativlage zweier Objekte (5), insbesondere gekapselte Längenmeßeinrichtung, bei der ein Maßstab (2), der aus einer Teilung (2b) und einem Teilungträger (2a) besteht, an einem Maßstabträger (1) in seiner Mitte mit einem festen Meßbezugspunkt angeordnet ist und der bei thermischen Längenänderungen im wesentlichen unabhängig vom Maßstabträger (1) in Meßrichtung geringfügig beweglich ist, der an beiden Enden (7) über Befestigungselemente (10) mit dem einen Objekt (5) verbunden ist, und bei der die Teilung (2b) des Maßstabs (2) von einer mit dem anderen Objekt verbundenen Abtasteinheit abgetastet wird, dadurch gekennzeichnet, daß der Maßstabträger (1) an den beiden Enden (7) mit den Befestigungselementen (10) über jeweils ein Längenausgleichselement (8) zur translatorisch beweglichen Lagerung dieser Enden (7) in Meßrichtung X verbunden ist und daß der Maßstabträger (1) etwa in seiner Mitte über ein zusätzliches Befestigungselement (6) direkt an dem einen Objekt (5) befestigt ist.

2. Meßeinrichtung nach Anspruch 1, dadurch gekennzeichnet, daß der Maßstab (2) mittels einer elastischen Klebeschicht (3) auf dem Maßstabträger (1) angeordnet ist.

3. Meßeinrichtung nach Anspruch 1, dadurch gekennzeichnet, daß der Maßstab aus einem flexiblen Metallband besteht, das in einer Nut des Maßstabträgers formschlüssig angeordnet ist.

4. Meßeinrichtung nach Anspruch 1, dadurch gekennzeichnet, daß das Befestigungselement (10) und das Längenausgleichselement (8) aus einem Stück bestehen.

5. Meßeinrichtung nach Anspruch 4, dadurch gekennzeichnet, daß das Längenausgleichselement (8) aus etwa senkrecht zur Meßrichtung X verlaufenden Schlitzen (9) zur mäanderförmigen geschlitzten Ausbildung des Befestigungselements (10) besteht.

6. Meßeinrichtung nach Anspruch 4, dadurch gekennzeichnet, daß das Längenausgleichselement (8a) und das Befestigungselement (10a) gemeinsam aus zwei miteinander verbundenen L-Winkeln gebildet sind.

7. Meßeinrichtung nach Anspruch 6, dadurch gekennzeichnet, daß das Längenausgleichselement (8a) aus zwei miteinander verbundenen Federgelenken (8a') mit senkrecht zur Meßrichtung X verlaufender Drehachse gebildet ist.

8. Meßeinrichtung nach Anspruch 1, dadurch gekennzeichnet, daß das Längenausgleichselement aus zwei miteinander verbundenen Drehgelenken mit senkrecht zur Meßrichtung X verlaufender Drehachse gebildet ist.

9. Meßeinrichtung nach Anspruch 1, dadurch gekennzeichnet, daß das Längenausgleichselement durch ein Federelement gebildet ist.

10. Meßeinrichtung nach Anspruch 1, dadurch gekennzeichnet, daß das Längenausgleichselement durch ein Längslager oder eine Längsführung gebildet ist.

11. Meßeinrichtung nach Anspruch 1, dadurch gekennzeichnet, daß der Maßstabträger (1) als Gehäuse zur Aufnahme des Maßstabs (2) ausgebildet ist.

12. Meßeinrichtung nach Anspruch 11, dadurch gekennzeichnet, daß das Besfestigungselement (10) gleichzeitig Abschlußdeckel des Gehäuses (1) ist.

13. Meßeinrichtung nach Anspruch 1, dadurch gekennzeichnet, daß wenigstens ein Befestigungselement (10) an den Enden (7) des Maßstabträgers (1) über ein Kugelgelenk (12) mit dem einen Objekt (5) verbunden ist.

14. Meßeinrichtung nach Anspruch 1, dadurch gekennzeichnet, daß der Maßstabträger (1) etwa in seiner Mitte über das zusätzliche Befestigungselement (6) direkt starr an dem einen Objekt (5) befestigt ist.

## Claims

1. Length measuring device for measuring or setting the relative position of two objects (5), in particular encapsulated length measuring device, in which a scale (2), which consists of a graduation (2b) and a graduation carrier (2a), is arranged on a scale carrier (1) in its centre with a fixed measuring reference point and which, when there are thermal changes in length, can move slightly in the measuring direction, essentially independently of the scale carrier (1) which is connected at both ends (7) to the one object (5) via fastening elements (10), and in which the graduation (2b) of the scale (2) is scanned by a scanning unit connected to the other object, characterized in that the scale carrier (1) is connected at both ends (7) to the fastening elements (10) in each case via a length compensating element (8) for the translatory movable bearing of these ends (7) in measuring direction X, and in that the scale carrier (1) is fastened approximately in its centre directly to the one object (5) via an additional fastening element (6).

2. Measuring device according to Claim 1, characterized in that the scale (2) is arranged on the scale carrier (1) by means of an elastic adhesive layer (3).

3. Measuring device according to Claim 1, characterized in that the scale consists of a flexible metal strip which is positively arranged in a groove of the scale carrier.

4. Measuring device according to Claim 1, characterized in that the fastening element (10) and the length compensating element (8) consist of one piece.

5. Measuring device according to Claim 4, characterized in that the length compensating element (8) consists of slots (9) approximately perpendicular to the measuring direction X for the meander-shaped slotted design of the fastening element (10).

6. Measuring device according to Claim 4, characterized in that the length compensating element (8a) and the fastening element (10a) are together formed from two interconnected L angles.

7. Measuring device according to Claim 6, characterized in that the length compensating element (8a) is formed from two interconnected spring joints (8a') with their axis of rotation running perpendicular to the measuring direction X.

8. Measuring device according to Claim 1, characterized in that the length compensating element is formed from two interconnected swivel joints with their axis of rotation running perpendicular to the measuring direction X.

9. Measuring device according to Claim 1, characterized in that the length compensating element is formed by a spring element.

10. Measuring device according to Claim 1, characterized in that the length compensating element is formed by a longitudinal bearing or a longitudinal guide.

11. Measuring device according to Claim 1, characterized in that the scale carrier (1) is designed as a housing for accommodating the scale (2).

12. Measuring device according to Claim 11, characterized in that the fastening element (10) is at the same time closure cover of the housing (1).

13. Measuring device according to Claim 1, characterized in that at least one fastening element (10) at the ends (7) of the scale carrier (1) is connected to the one object (5) via a ball joint (12).

14. Measuring device according to Claim 1, characterized in that the scale carrier (1) is fastened approximately in its centre directly rigidly to the one object (5) via the additional fastening element (6).

**Revendications**

1. Dispositif de mesure de longueurs, notamment enfermé dans une enceinte, pour mesurer ou régler la position relative de deux objets (5), dans lequel une règle graduée (2), constituée par une division (2b) et par un support de division (2a), est agencée sur un support de règle graduée (1), au milieu de celui-ci, en un point de référence fixe, ledit support de division étant légèrement mobile dans la direction de mesure; cela sensiblement indépendamment du support de règle graduée (1), lors des variations de longueur d'origine thermique, ledit support de règle graduée (1) étant solidarisé, en ses deux extrémités (7), par des éléments de fixation (10), au premier objet (5), et la division (2b) de la règle graduée (2) étant lue par une unité de lecture solidarisée à l'autre objet, caractérisé par le fait qu'en ses deux extrémités (7), le support de règle graduée (1) est solidarisé aux éléments de fixation (10), cela à chaque fois par un élément de compensation longitudinale (8), de manière que ses extrémités (7) puissent être supportées avec possibilité de translation suivant la direction de mesure X, et par le fait que, sensiblement en son milieu, le support de règle graduée (1) est fixé directement au premier objet (5) par un élément de fixation supplémentaire (6).

2. Dispositif de mesure selon revendication 1, caractérisé par le fait que la règle graduée (2) est agencée sur le support de règle graduée (1) au moyen d'une couche d'adhésif élastique (3).

3. Dispositif de mesure selon revendication 1, caractérisé par le fait que la règle graduée est constituée par une bande métallique flexible agencée, avec conjugaison de formes, dans une rainure du support de règle graduée.

4. Dispositif de mesure selon revendication 1, caractérisé par le fait que l'élément de fixation (10) et l'élément de compensation longitudinale . (8) sont en une seule pièce.

5. Dispositif de mesure selon revendication 4, caractérisé par le fait que l'élément de compensation longitudinale (8) est réalisé par une configuration en méandres de l'élément de fixation (10), créée par des fentes (9) dirigées sensiblement perpendiculairement à la direction de mesure X.

6. Dispositif de mesure selon revendication 4, caractérisé par le fait que l'élément de compensation longitudinale (8a) et l'élément de fixation (10a) sont constitués conjointement par deux équerres en L solidarisées l'une à l'autre.

7. Dispositif de mesure selon revendication 6, caractérisé par le fait que l'élément de compensation longitudinale (8a) est constitué par deux articulations élastiques (8a') solidarisées l'une à l'autre, avec axe de pivotement perpendiculaire à la direction de mesure X.

8. Dispositif de mesure selon revendication 1, caractérisé par le fait que l'élément de compensation longitudinale est constitué par deux articulations de pivotement solidarisées l'une à l'autre, avec axe de pivotement perpendiculaire à la direction de mesure X.

9. Dispositif de mesure selon revendication 1, caractérisé par le fait que l'élément de compensation longitudinale est constitué par un élément élastique.

10. Dispositif de mesure selon revendication 1, caractérisé par le fait que l'élément de compensation longitudinale est constitué par un palier de translation ou par une glissière longitudinale.

11. Dispositif de mesure selon revendication 1, caractérisé par le fait que le support de règle graduée (1) est réalisé sous la forme d'une enceinte recevant la règle graduée (2).

12. Dispositif de mesure selon revendication 11, caractérisé par le fait que l'élément de fixation (10) sert aussi de couvercle de fermeture d'extrémité de l'enceinte (1).

13. Dispositif de mesure selon revendication 1, caractérisé par le fait qu'au moins un élément de fixation (10) aux extrémités (7) du support de règle graduée (1) est relié au premier objet (5) par l'intermédiaire d'une rotule (12).

14. Dispositif de mesure selon revendication 1, caractérisé par le fait que, sensiblement en son milieu, le support de règle graduée (1) est fixé rigidement au premier objet (5), cela directement par l'élément de fixation supplémentaire (6).

FIG. 1

FIG.2